# EUROPEAN PATENT SPECIFICATION

(11) **EP 3 694 772 B1**
(45) Date of publication and mention of the grant of the patent: **02.12.2026**
(21) Application number: 18793353.6
(22) Date of filing: 29.10.2018
(51) Int. Cl.: B62D 49/08, C04B 18/14

(54) **BALANCE WEIGHT OF STEEL AND HEAVY CONCRETE COMPONENTS AND METHOD OF PRODUCTION BASED THEREON**
AUSWUCHTGEWICHT VON STAHL- UND SCHWERBETONBAUTEILEN UND DARAUF BASIERENDES HERSTELLUNGSVERFAHREN
CONTREPOIDS DE COMPOSANTS EN ACIER ET EN BÉTON LOURD ET PROCÉDÉ DE PRODUCTION BASÉ SUR CELUI-CI

(30) Priority: 18.05.2018 TR 201807042
(43) Date of publication of application: 19.08.2020
(73) Proprietor: ACRETE INOVASYON TICARET A.S., Yunusemre / Manisa (TR)
(72) Inventor: ATILGAN, Ugur, 59850 Corlu/Tekirdag (TR)
(74) Representative: Novagraaf Group
(86) International application number: PCT/TR2018/050633
(87) International publication number: WO 2019/221678

(56) References cited:
- WO-A2-2018/226181
- JP-A- 2001 080 886
- JP-A- 2009 179 499
- JP-A- 2009 184 173
- KR-A- 20030 080 308
- KR-A- 20030 080 308
- KR-A- 20090 123 103
- KR-A- 20090 123 103
- US-A1- 2008 293 866

## Description

### Field of the Invention

The invention relates to balance weights used in sectors, including tractors and agricultural machinery, that currently need casting weight.

The invention relates in particular to the balance weight of steel and heavy concrete components and a production method for the said balance weight, as an alternative to pig casting and spheroidal graphite casting, used in connection with the design of the producers in the front and rear regions of tractors or different agricultural machines.

### Prior Art

At present, balance weights, which are called as balance weight, are mounted on the front and rear part of the vehicle according to the conditions of the land and the operations to be applied to the land, especially in tractors and agricultural machines. In this way, the balance of the tractor or agricultural machine can be adjusted according to the variable terrain and load conditions and the position of the center of gravity can be adjusted as desired. In the present art, the balance weights are produced as pig castings and spheroidal castings. Because of the high cost of pig steel raw materials, the product costs of existing balance weights are also quite high. Furthermore, preparing different casting molds for each balance weight for casting is another factor that increases the cost. Furthermore, since non-recyclable materials are used in existing balance weights, reutilization of the raw materials is not possible.

JP 2009 179499 A discloses an aggregate containing at least one of FeO, Fe203 and metallic iron as a main constituent. Said aggregate can be used in counterweights. D1 only explains the particle sizes in aggregate mixture. 20% or more of the total particles are spherical, and the particles that pass through a sieve having a nominal size of 0.15 mm are all particles and counterweight containing heavy aggregate having a mass percentage of 10% to 20%. There is no clear explanation in D1 that a recyclable raw material such as scale, is used in the said aggregate mixture

JP 2009 1984173 A relates to a method of manufacturing a counter weight which can use a prepacked construction method for manufacturing the counter weight of construction machinery by a grouting mortar having an excellent flowability containing weight fine aggregate, and to reduce vibration generated when compacting weight concrete used in manufacturing the counter weight. In the method of manufacturing the counter weight, a rough aggregate is previously filled and the mortar is cast into a clearance of the rough aggregate. The weight fine aggregate contained in the mortar is an aggregate containing at least one of FeO, Fe203, and metallic iron as a main constituent. In the weight fine aggregate, spherical particles contains 20% or more among whole particles, and particles passing through a screen having a nominal size of 0.15 mm are 10-20% by mass percentage among whole particles.

A balance weight made entirely of concrete is disclosed by the utility model of the publication number CN203221829U.

The utility model of the publication number CN2671834Y disclosed a concrete weight concrete structure of which was reinforced. The corresponding concrete structure is produced from cement mortar reinforced with fiber material. It is connected by being screwed on the wheel by the openings provided on the concrete weight.

### Objective of the Invention

The objective of the invention is to develop a balance weight consisting of steel and heavy concrete components and a production method for the said balance weight, as an alternative to pig casting and spheroidal graphite casting.

Another objective of the invention is to reduce the product cost and contribute to the economy of the country by means of the balance weight consisting of steel and heavy concrete components.

Another objective of the invention is to recover the raw materials by using recycled materials in the heavy concrete mixture used in equilibrium weight.

Another objective of the invention is to reduce the process and moulding costs by removing the casting mold manufacturing required for the balance weights of the pig casting and spheroidal graphite casting.

### Short Description of the Drawings

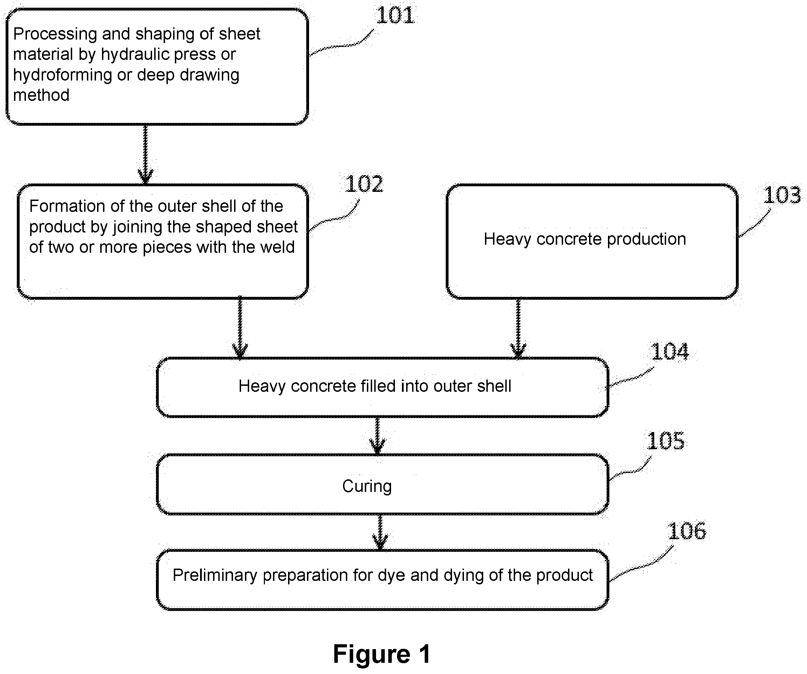

Figure 1 is a workflow diagram of the production method pertaining to the balance weight of the invention.

### Reference Numbers of the Figures

101. Processing and shaping of sheet material by hydraulic press or hydroforming or deep drawing method
102. Formation of the outer shell of the product by joining the shaped sheet of two or more pieces with the weld
103. Heavy concrete production
104. Heavy concrete filled into outer shell
105. Curing
106. Preliminary preparation for dye and dying of the product.

### Detailed Description of the Invention

The invention relates to the balance weight of steel and heavy concrete components and an improved method of production for the said balance weight, as an alternative to pig casting and spheroidal graphite casting.

The balance weight of the invention comprises steel sheet and components between 10% and 60% by weight and heavy concrete components between 40% and 90% by weight.

The heavy concrete mixture contains cement between 10% and 30% by weight, iron ore between 20% and 50% by weight, scale between 20% and 60% by weight, and other aggregates between 5% and 10% by weight. Recycled material is used as much as the scale amount used within the heavy concrete mixture.

Figure 1 shows the work flow diagram of the method of producing the balance weight composed of steel sheet and its components and heavy concrete components.

The balance weight production method described herein generally comprises the processes of shaping the outer sheet by method of press printing, hydroforming or deep drawing and forming the outer shell, filling and curing the heavy concrete mixture in the heavy concrete production and outer shell, finally making the preliminary preparation of dye and having the final form of the product by being dyed.

Outer shell forming: The outer sheet is shaped by press printing or hydroforming or deep drawing, and the outer shell is formed by combining the shaped sheet material consisting of two or more shaped parts by the method of welding.

Heavy Concrete Production: Heavy concrete components are prepared by mixing in the mixer according to the corresponding recipe. The prepared heavy concrete and other metal components are placed into the product through the filling end of the outer shell and are held for setting in the intermediate product ware for 12-36 hours according to air and ambient temperature under the conditions of curing.

Product Preparation and Dye: The filling opening of the cured product is closed by welding sheet. The dye is prepared and the product is dyed and finalized.

The balance weight consisting of steel and heavy concrete components thus reduces the cost of the product and contributes to the economy of the country.

Recycling of raw materials is achieved by using recycled materials in the heavy concrete mix used in the balance weight. In addition, process and mold costs are lowered by eliminating the production of casting molds required for balance weights of pig casting and spheroidal graphite casting, and a product is developed with no alternative one.

## Claims

1. Balance weight that can be used in sectors, including tractors and agricultural machinery, that currently need casting weight, which comprises steel sheet and components between 10% and 60% by weight and heavy concrete components between 40% and 90% by weight, wherein the heavy concrete mixture comprises cement between 10% and 30% by weight, iron ore between 20% and 50% by weight, and other aggregates between 5% and 10% by weight, **characterized in that** the heavy concrete mixture further comprises scale between 20% and 60% by weight, wherein the scale used within the heavy concrete mixture is recyclable material.

## Patentansprüche

1. Ausgleichsgewicht, das in Sektoren verwendet werden kann, die Traktoren und landwirtschaftliche Maschinen einschließen, die derzeit Gussgewicht benötigen, das Stahlblech und Komponenten zu zwischen 10 Gew.-% und 60 Gew.-% und Schwerbetonkomponenten zu zwischen 40 Gew.-% und 90 Gew.-% umfassen, wobei die Schwerbetonmischung Zement zu zwischen 10 Gew.-% und 30 Gew.-%, Eisenerz zu zwischen 20 Gew.-% und 50 Gew.-% und andere Zuschlagstoffe zu zwischen 5 Gew.-% und 10 Gew.-% umfasst, **dadurch gekennzeichnet, dass** die Schwerbetonmischung ferner Zunder zu zwischen 20 Gew.-% und 60 Gew.-% umfasst, wobei der Zunder, der in der Schwerbetonmischung verwendet wird, recycelbares Material ist.

## Revendications

1. Contrepoids pouvant être utilisé dans des secteurs, y compris des tracteurs et des machines agricoles, qui nécessitent actuellement des contrepoids moulés, qui comprend de la tôle d'acier et des composants entre 10 % et 60 % en poids et des composants en béton lourd entre 40 % et 90 % en poids, dans lequel le mélange de béton lourd comprend du ciment entre 10 % et 30 % en poids, du minerai de fer entre 20 % et 50 % en poids, et d'autres agrégats entre 5 % et 10 % en poids, **caractérisé en ce que** le mélange de béton lourd comprend en outre de la calamine entre 20 % et 60 % en poids, dans lequel la calamine utilisée dans le mélange de béton lourd est un matériau recyclable.
